# EUROPÄISCHE PATENTSCHRIFT

(11) **EP 0 920 581 B1**
(45) Veröffentlichungstag und Bekanntmachung des Hinweises auf die Patenterteilung: **03.09.2003**
(21) Anmeldenummer: 97937471.7
(22) Anmeldetag: 11.07.1997
(51) Int. Cl.: F02M 35/024, B01D 46/02, B60H 3/06

(54) **GEHÄUSEFILTER**
FILTER WITH HOUSING
FILTRE A CARTER

(30) Priorität: 22.08.1996 DE 19633896
(43) Veröffentlichungstag der Anmeldung: 09.06.1999
(73) Patentinhaber: FILTERWERK MANN + HUMMEL GmbH, 71631 Ludwigsburg (DE)
(72) Erfinder: BULLINGER, Alfred, D-70825 Korntal (DE); LEONHARDT, Michael, D-71726 Benningen (DE); SCHOLL, Hans-Peter, D-74359 Mundelsheim (DE)
(74) Vertreter: Voth, Gerhard, Dipl.-Ing.
(86) Internationale Anmeldenummer: EP9703678
(87) Internationale Veröffentlichungsnummer: WO98007978

(56) Entgegenhaltungen:
- EP-A- 0 318 417
- EP-A- 0 470 330
- WO-A-95/30829
- DE-U- 9 312 051

## Beschreibung

Die Erfindung betrifft ein Gehäusefilter nach dem Oberbegriff des Hauptanspruchs.

Aus der EP 318 417 A2 ist ein Gehäusefilter bekannt, bei dem eine Filterpatrone in ein Gehäuse eingespannt wird und mittels eines Exzenters und eines Federelements fixiert werden kann. Damit die Filterpatrone zuverlässig in dem Gehäuse fixiert ist, sind hohe Einspannkräfte erforderlich. Diese werden über geeignete Befestigungselemente erzeugt.

Die Filterpatrone wird axial abgedichtet. Dies bedeutet, daß ein bestimmter Toleranzausgleich erforderlich ist, da eine Filterpatrone gewisse Längentoleranzen aufweist. Für diesen Toleranzausgleich sind ebenfalls zusätzliche mechanische Elemente erforderlich.

Der Erfindung liegt die Aufgabe zugrunde, ein Gehäusefilter zu schaffen, das mit einem geringen Bauteileaufwand hergestellt werden kann, keine toleranzausgleichenden Elemente benötigt und die genannten Nachteile vermeidet.

Diese Aufgabe wird ausgehend von dem Oberbegriff des Hauptanspruchs durch dessen kennzeichnenden Merkmale gelöst.

Der wesentliche Vorteil der Erfindung liegt darin, daß der erfindungsgemäße Aufbau zur zuverlässigen Abstützung des Filterelements sowohl im Bereich des Anschlußstutzens als auch auf der gegenüberliegenden Seite führt. Zur Fixierung der Filterelements auf der gegenüberliegenden Seite bieten sich mehrere Möglichkeiten an. Zum einen besteht die Möglichkeit, das Filter im Randbereich an der Gehäusewandung abzustützen, zum anderen bietet sich die Möglichkeit, wie in einer weiteren Ausgestaltung der Erfindung beschrieben, einen Axialanschlag für das Filterelement vorzusehen, welcher mittelbar oder unmittelbar die axiale Lage des Filterelements fixiert. Dieser Axialanschlag kann nach Art eines durch Handkraft betätigbaren Schiebeelements oder eines Scharniers oder einer Klappe ausgestaltet sein, wobei die Abstützung an dem Gehäuse erfolgt. Bei einem Schiebeelement erfolgt die Führung des Filterelements durch geeignete Führungsflächen oder weiterbildungsgemäß durch eine axiale Öffnung des Filterelements, in welche ein Führungsstutzen des Schiebeelements eingreift. Damit die Position des Schiebeelements innerhalb eines gewissen Bereichs definiert ist, kann dieses gemäß einer weiteren Ausgestaltung der Erfindung mit einer Rastnase versehen sein, die einen Anschlag an dem Gehäuse bildet.

Insbesondere bei der Anwendung des Filters für die Ansaugluft einer Brennkraftmaschine muß gewährleistet sein, daß ein Betrieb der Brennkraftmaschine ohne Filter verhindert wird. Dies erfolgt gemäß der Erfindung dadurch daß an dem Schiebeelement ein Sperrelement vorgesehen ist, welches ein Schließen des Gehäusedeckels verhindert, wenn kein Filterelement oder ein nicht ordnungsgemäß eingelegtes Filterelement vorhanden ist. Erst bei einem ordnungsgemäß eingelegten Filterelement läßt sich der Deckel sachgerecht schließen, so daß bei geschlossenem Deckel gewährleistet ist, daß ein Filterelement korrekt eingelegt ist und damit die Ansaugluft über das Filterelement geführt wird.

Es wird weiterbildungsgemäß vorgeschlagen, das Filterelement mit einem Stützkörper zu versehen und über den Stützkörper die reinluftseitige Abdichtung zu realisieren. Der Stützkörper hat den Vorteil, daß besonders hohe Differenzdrücke wirksam abgefangen werden können. Dieser Stützkörper kann beispielsweise eine Dichtung in Form einer O-Ring-Dichtung aufweisen, die die Abdichtung zwischen Rohluft- und Reinluftraum bewirkt.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand von Ausführungsbeispielen näher erläutert. Es zeigt:
- Figur 1: ein Gehäusefilter in einer Schnittdarstellung mit geöffnetem Deckel,
- Figur 2: das in Figur 1 dargestellte Gehäusefilter mit geschlossenem Deckel,
- Figur 3 a bis c: ein Filtersystem mit Stützrohr in verschiedenen Ansichten.

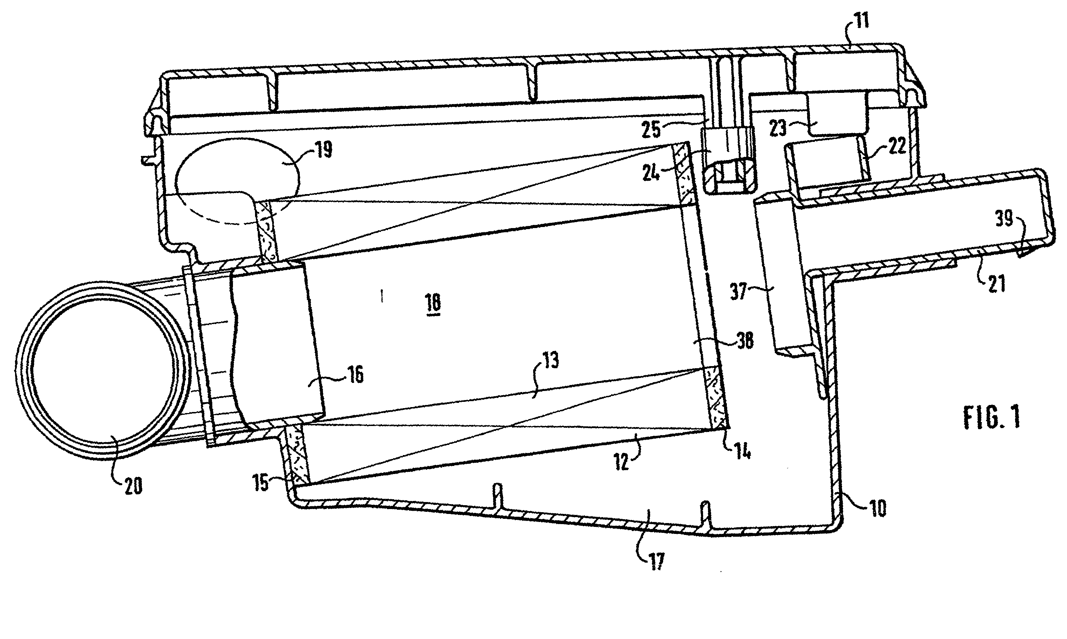

Das in Figur 1 gezeigte Filter besteht aus einem Gehäuse 10, einem Gehäusedeckel 11 sowie einem in dem Gehäuse angeordneten Filterelement 12. Das Filterelement 12 ist ein Papierfilter 13 mit zick-zack-förmiger Sternfaltung. Das Papierfilter 13 weist an seinen Stirnseiten Endscheiben 14, 15 auf. Die Endscheibe 15 ist über einen Anschlußstutzen 16 des Gehäuses 10 geschoben und bewirkt eine radiale Abdichtung zwischen dem Rohluftraum 17 und dem Reinluftraum 18. Die Rohluft strömt über die Rohluftzutrittsöffnung 19 in den Rohluftraum 18. Während die mitgeführten Partikel von dem Filterelement 12 ausgefiltert werden, verläßt die gereinigte Luft über den Reinluftraum 18 und den Anschlußstutzen 16 sowie das Reinluftrohr 20 das Filtersystem. Das Gehäuse ist zur Stabilisierung des Filterelements 12 mit einem Schiebeelement 21 versehen. Zum Einsetzen bzw. Herausnehmen des Filterelements 12 befindet sich das Schiebeelement 21 in der hier gezeigten Stellung. Das Schiebeelement weist ein Sperrelement 22 auf, welches in der gezeigten Lage ein Aufsetzen des Deckels 11, der mit einer Lasche 23 versehen ist, verhindert. Dies bedeutet, daß bei geöffnetem Schiebelement 21 eine Nutzung des Gehäusefilters nicht möglich ist, sondern diese Position lediglich zum Austausch des Filterelements 12 geeignet ist. Der Gehäusedeckel 11 weist ferner ein Sicherungselement 24 auf. Dieses besteht aus einem Stift 25 und einer daran befestigten Elastomerkappe 26.

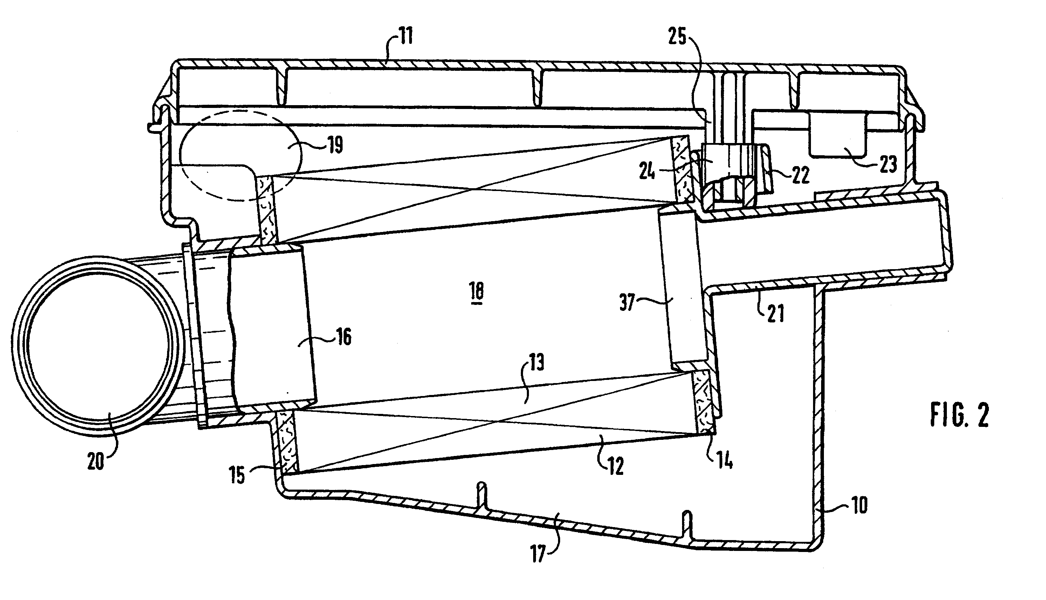

Die Funktionsweise des Sicherungselements 24 wird anhand der Figur 2 näher erläutert. Gleich Teile sind mit gleichen Bezugszeichen versehen.

Sobald das Schiebeelement 21 an das Filterelement 12 herangeführt ist, wird die Betriebsstellung erreicht. Diese Betriebsstellung ist in der Figur 2 sichtbar. Die rechtsseitige Abdichtung des Filterelements zwischen Rohluftraum und Reinluftraum erfolgt auch hier durch einen Führungsstutzen 27, der in Verbindung mit der Endscheibe 14 eine radiale Abdichtung bewirkt. In der hier gezeigten Stellung des Schiebelements 21 kann das Sicherungselement 24 in das Sperrelement 22 eingreifen und verhindert ein Öffnen des Schiebeelements 21. Gleichzeitig ist nunmehr in ordnungsgemäßes Schließen des Gehäusedeckels 11 möglich. Der Gehäusedeckel 11 wird auf dem Gehäuse mit Spannverschlüssen oder Schnappverschlüssen fixiert.

Die Elastomerkappe 26 auf dem Stift 25 bewirkt eine weiche Verbindung zwischen Deckel und Schiebeelement 21 und verhindert ein Übertragen von Schwingungen oder Erschütterungen. Außerdem wirkt die weiche Verbindung toleranzausgleichend.

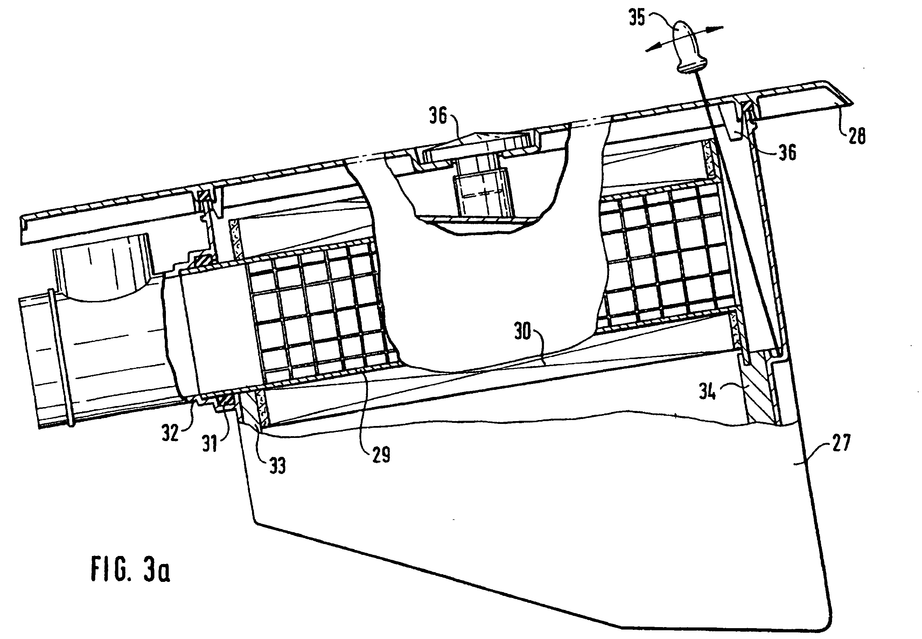

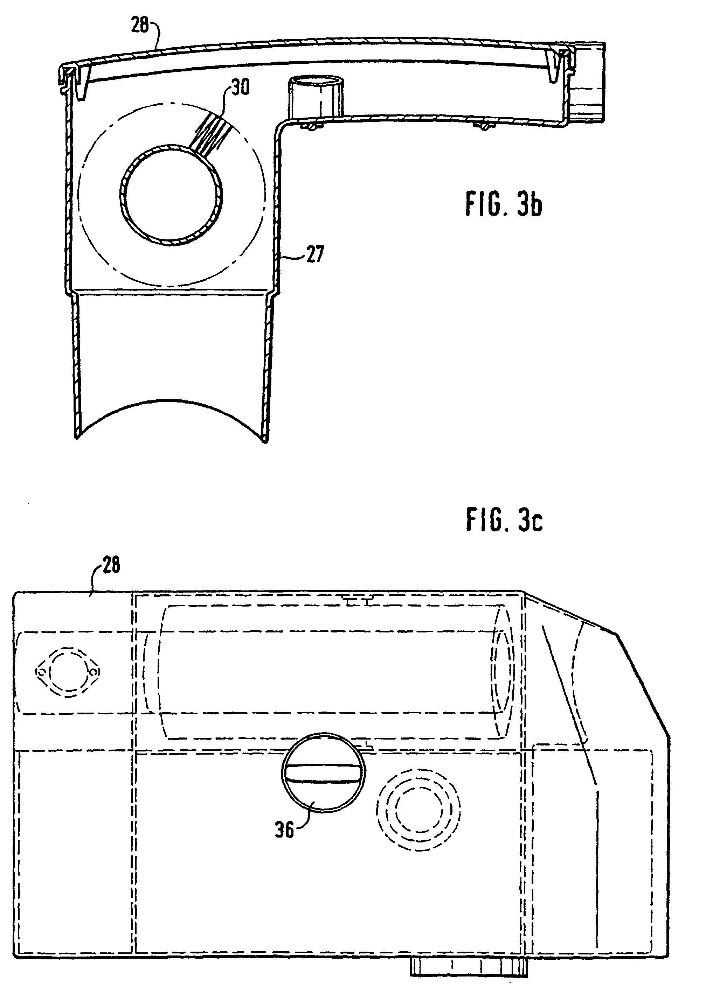

Figur 3 zeigt in den verschiedenen Darstellungen a - c ein Filtersystem mit einem Stützrohr. Ein Filtergehäuse 27 ist mit einem Gehäusedeckel 28 versehen. In dem Filtergehäuse befindet sich auf einem Stützrohr 29 das Filterelement 30. Das Stützrohr ist über ein Dichtelement 31 mit dem Reinluftanschlußstutzen 32 verbunden. Das Filterelement kann an den Rippen 33, 34 des Filtergehäuses zentriert bzw. vorpositioniert werden. Zum Einbau des Filterelements 30 kann dieses mit einem geeigneten Mittel, beispielsweise mit einem Hebel 35 in die hier gezeichnete axiale Sollposition bewegt werden. Zum Ausbau wird das Filterelement aus dieser Sollposition herausgezogen und nach oben entfernt.

Der Gehäusedeckel ist mit einer Sicherung 36 versehen. Diese Sicherung besteht aus einer in das Innere des Gehäuses sich erstreckende Nase. Sofern das Filterelement 30 sich nicht in der Sollage befindet, verhindert diese Nase das Schließen des Gehäusedeckels.

Wie Figur 3b zeigt, ist das Filterelement asymmetrisch in dem Gehäuse angeordnet. Der Deckel 28 ist gemäß Figur 3c mit einem Zentralverschluß 36 versehen. Dieser Zentralverschluß ist beispielsweise ein Bajonettverschluß und ermöglicht ein besonders rasches und problemloses Öffnen und Verschließen des Gehäusedeckels 28.

## Patentansprüche

1. Gehäusefilter, bestehend aus einem Filterelement in Form einer Rundpatrone, einem Gehäuse sowie einem Gehäusedeckel, wobei das Gehäuse eine Rohluftzutrittsöffnung und eine Reinluftaustrittsöffnung aufweist und die Reinluftaustragsöffnung mit einem Anschlussstutzen versehen ist, auf dem das Filterelement angeordnet ist, **dadurch gekennzeichnet, dass** das Filterelement (12) an der dem Anschlußstutzen (16) zugewandten Seite eine Radialdichtung (15) aufweist und eine radiale Abdichtung zwischen Rohluftraum (17) und Reinluftraum (18) bewirkt und das Filterelement (12) an der dem Anschlussstutzen (16) gegenüber liegenden Seite über das Gehäuse (10) geführt ist, derart, dass an dem Gehäuse ein Schiebeelement (21) vorgesehen ist, wobei das Schiebeelement (21) einen Führungsstutzen (37) aufweist, der in eine axiale Öffnung (38) des Filterelements (12) eingreift und wobei der Gehäusedeckel (11) ein Sicherungselement (24) bestehend aus einem Stift (25) und einer daran befestigten Elastomerkappe (26) aufweist, das in ein Sperrelement (22) am Schiebeelement eingreift.

2. Gehäusefilter nach Anspruch 1, **dadurch gekennzeichnet, dass** das Schiebeelement (21) mit wenigstens einer Rastnase (39) versehen ist, welche einen Verschiebebereich des Elements (21) an dem Gehäuse definiert.

3. Gehäusefilter nach einem der vorhergehenden Ansprüche, **dadurch gekennzeichnet, dass** das Filterelement (30) mit einem Stützkörper (29) versehen ist und der Stützkörper (29) in Verbindung mit dem Anschlußstutzen (32) die reinluftseitige Abdichtung bewirkt.

4. Gehäusefilter nach Anspruch 3, **dadurch gekennzeichnet, dass** zwischen Stützkörper (23) und Anschlußstutzen (32) eine Dichtung (31) insbesondere in Form einer O-Ring-Dichtung vorgesehen ist.

## Claims

1. Housing-type filter, comprising a filter element in the form of a cylindrical cartridge, a housing and a housing cover, the housing having an unfiltered air inlet aperture and a filtered air outlet aperture, and the filtered air outlet aperture being provided with a connecting piece, on which the filter element is disposed, **characterised in that** the filter element (12) has a radial seal (15) on the side facing the connecting piece (16) and effects a radial sealing between the unfiltered air chamber (17) and filtered air chamber (18), and the filter element (12) is guided over the housing (10) on the side situated opposite the connecting piece (16) in such a manner that a sliding element (21) is provided on the housing, the sliding element (21) having a guide piece (37) which engages in an axial aperture (38) in the filter element (12), and the housing cover (11) having a securing element (24), which comprises a pin (25) and an elastomeric cap (26) mounted thereon, said securing element engaging in a blocking element (22) on the sliding element.

2. Housing-type filter according to claim 1, **characterised in that** the sliding element (21) is provided with at least one locking projection (39), which defines a displacement range of the element (21) on the housing.

3. Housing-type filter according to one of the preceding claims, **characterised in that** the filter element (30) is provided with a supporting body (29), and the supporting body (29) effects the sealing on the filtered air side in conjunction with the connecting piece (32).

4. Housing-type filter according to claim 3, **characterised in that** a seal (31), more especially in the form of an O-ring seal, is provided between the supporting body (23) and connecting piece (32).

## Revendications

1. Filtre à carter, composé d'un élément filtrant en forme de cartouche ronde, d'un carter équipé d'un couvercle, et présentant une ouverture d'amenée d'air brut et d'une ouverture de sortie d'air épuré équipée d'une tubulure de raccordement sur laquelle est monté l'élément filtrant,
**caractérisé en ce que**
• l'élément filtrant (12), du côté situé vers la tubulure de raccordement (16) présente un joint d'étanchéité (15) qui assure une étanchéité radiale entre la chambre d'air brut (17) et la chambre d'air épuré (18),
• l'élément filtrant (12), du côté éloigné de la tubulure de raccordement (16) est guidé dans le carter (10) par l'intermédiaire d'un élément (21) qui coulisse sur celui-ci et qui présente une tubulure de guidage (37) engagée dans une ouverture axiale (38) de l'élément filtrant (12),
• le couvercle de carter (11) présente un élément de sécurité (24) composé d'une broche (25) et d'un capot en élastomère (26) fixé sur celle-ci, et engagé dans un élément d'arrêt (22) porté par l'élément coulissant.

2. Filtre à carter,
**caractérisé en ce que**
l'élément coulissant (21) présente au moins une dent d'accrochage (39) définissant la plage de coulissement de l'élément (21)sur le carter.

3. Filtre à carter selon une des revendications précédentes,
**caractérisé en ce que**
l'élément filtrant (30) est équipé d'un corps de soutien (29) qui, en liaison avec la tubulure de raccordement (32), assure l'étanchéité du côté de l'air purifié.

4. Filtre à carter selon la revendication 3,
**caractérisé en ce qu'**
entre le corps de soutien (23) et la tubulure de raccordement (32) est prévu un joint d'étanchéité (31), notamment sous la forme d'une bague torique.
